# EUROPEAN PATENT SPECIFICATION

(11) **EP 2 845 823 B1**
(45) Date of publication and mention of the grant of the patent: **08.11.2017**
(21) Application number: 14275189.0
(22) Date of filing: 10.09.2014
(51) Int. Cl.: B65G 67/20

(54) **Skate loading system**
Rollschuhladesystem
Système de chargement de patin

(30) Priority: 10.09.2013 GB 201316129
(43) Date of publication of application: 11.03.2015
(73) Proprietor: Blackrock Engineering Limited, Great Budworth Northwich Cheshire CW9 6HF (GB)
(72) Inventor: Kordel, Wojtek, Garston, Liverpool Merseyside L19 2NY (GB)
(74) Representative: Williams Powell

(56) References cited:
- EP-A1- 0 407 910
- EP-A2- 0 796 809
- GB-A- 2 486 201
- US-A- 4 684 311

## Description

### Field of the Invention

The present invention relates to a skate loading system suitable for loading and unloading of cargo from trailers, for example.

### Background to the Invention

Loading heavy or large loads into containers such as lorry trailers is often done using so called moving floor systems where a reciprocating drive is built into the floor of the container and is used to "walk" the load into or out of the container. This is expensive as each container needs its own drive system.
An alternative is to use wheeled skates that run in channels in the floor of the container and include a support that can be elevated so as to lift the load slightly above the floor surface. Once the load is in place, the elevated support can be lowered, thereby lowering the load onto the floor of the container, and the skate is then retracted along the channel. In the lowered position, the skate does not project above the floor level and so moves without catching the load.
As containers grow in length and capacity, wheeled skate conveyor systems are running into difficulties. A skate based loading system typically extends into the loading dock so that skates can convey the goods directly into/out of the trailer. Trailer and dock lengths have recently almost doubled (approaching 25m for the trailer) for some recent applications.
Precise alignment of the container to the dock is generally required so that the channels line up. If the alignment is not sufficient, the system may not work or may even de-rail. In conventional systems, trailers are typically around 40 foot long (12 metres). If there was not precise alignment between a channel in the trailer and the mating dock in all X-Y-Z planes then the transfer of skates and goods between trailer/dock leads to de-tracking because the channels do not line up on the X-Y plane. This can be even worse if a change of slope occurs on the Z plane.

EP0796809 discloses a vehicle loading system according to the preamble of claim 1.

### Statement of Invention

According to an aspect of the present invention, there is provided a skate loading system as claimed in claim 1.
In one embodiment, a wheeled skate loading system includes a skate having a pair of wheels, the pair of wheels being spaced apart and defining a slot therebetween, the loading system further comprising a skate guide having a pair of channels each for receiving a respective wheel of the skate and a central upstand running between and in parallel to the channels to project into the slot of the skate when the skate is running along the guide.
Preferably, the skate guide further includes side guidance upstands running in parallel to the channels and the central upstand, each wheel running in a channel between a respective side guidance upstand and the central upstand. The present invention, the central upstand (and also the side upstands where present) provide tracking assistance to wheels of the skate. Furthermore, the upstands provide alignment assistance for aligning the trailer and channel with one on a dock etc. Should the skate nevertheless be not entirely aligned with the guide, the upstand(s) guide the skate into the correct positioning and alignment.

A further advantage is that the guide(s) can be ridden over by the wheels of a hand operated pallet truck or the like with limited bumping. The skate upstand reduces the gap in the trailer floor that is present in conventional channel based systems and means that wheels of the pallet truck or any other wheeled vehicle that may be used to load the trailer do not get stuck.

### Brief Description of the Drawings

An embodiment of the present invention will now be described, by way of example only, with reference to the accompanying drawings in which:
Figure 1 is a cross-sectional view of aspects of a skate loading system according to an embodiment of the present invention;
Figure 2 is a perspective view of the skate loading system of Figure 1;
Figure 3 is a cross-sectional view of aspects of the skate loading system of Figures 1 and 2 during loading;
Figure 4 is a perspective view of the skate loading system of Figure 3;
Figure 5 is a cross-sectional view of aspects of the skate loading system of Figure 1 during removal of a skate; and,
Figure 6 is a perspective view of the skate loading system of Figure 5.

### Detailed Description

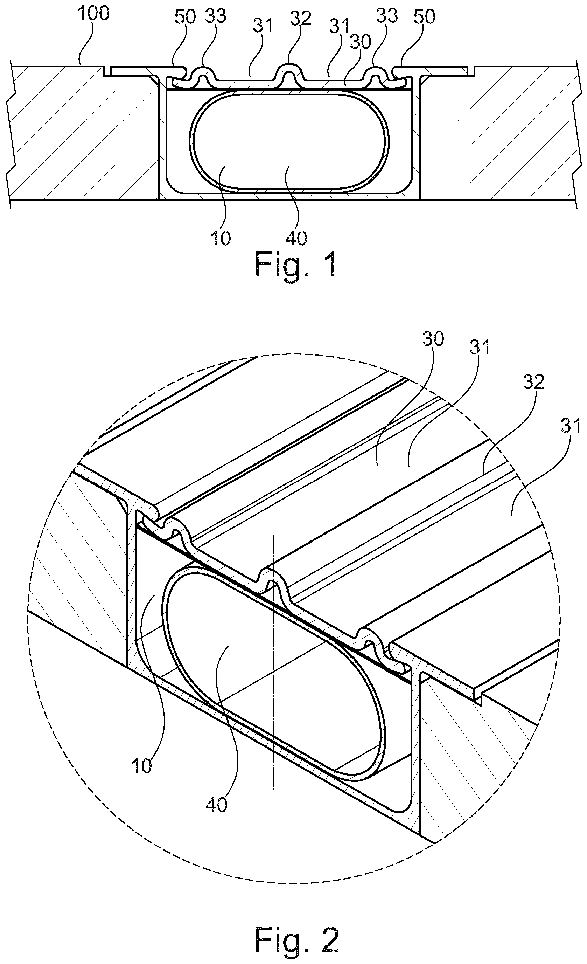

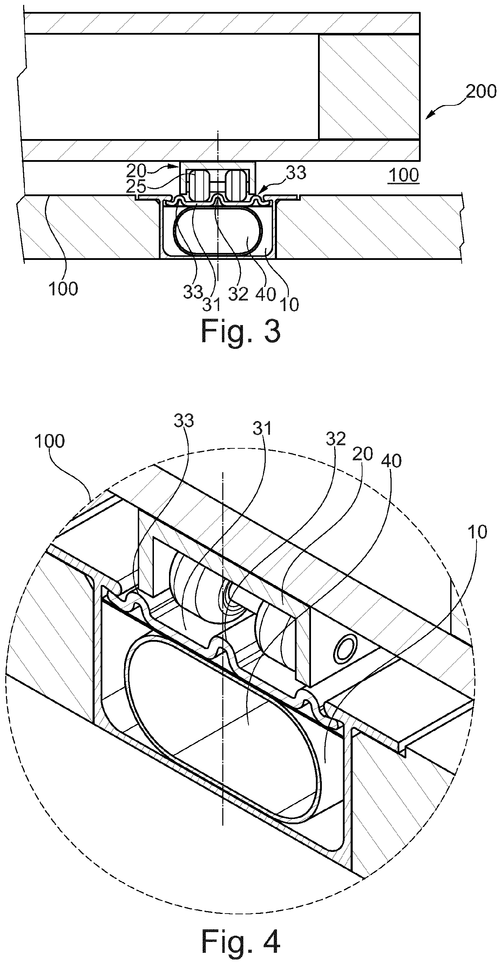

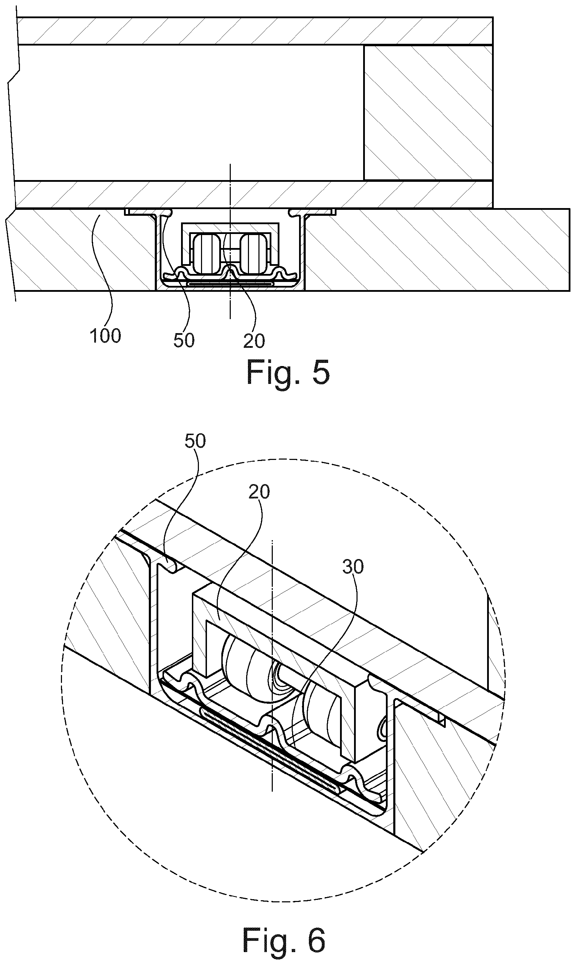

Figure 1 is a cross-sectional view of aspects of a skate loading system according to an embodiment of the present invention. Figure 2 is a perspective view of the skate loading system of Figure 1. Figure 3 is a cross-sectional view of aspects of the skate loading system of Figures 1 and 2 during loading. Figure 4 is a perspective view of the skate loading system of Figure 3. Figure 5 is a cross-sectional view of aspects of the skate loading system of Figure 1 during removal of a skate. Figure 6 is a perspective view of the skate loading system of Figure 5.

The skate loading system includes a channel (10) for receiving a skate (20) having at least a pair of wheels (25). The channel (10) includes a skate guide (30) having a pair of tracks (31) each for receiving a respective wheel (25) of the skate (20) and an upstand (32) running in between and in parallel to the tracks (31).

The skate loading system further comprises a lifting unit (40) controllable to raise and lower the skate guide (30) in the channel (10).

Figures 1 and 2 show the skate loading system in a configuration ready for loading. The skate guide (30) is in a raised position and a skate supporting a load (200) can be directed such that its wheels enter and roll along the tracks as shown in Figures 3 and 4.

The lifting unit (40) may be an air lifting sack, a mechanical lift or some other form of lifting arrangement. It will be appreciated that one or a number of lifting units may be positioned along the length of the channel for lifting the skate guide (30).

Figures 5 and 6 show the system where the air bag has been deflated, allowing the skate to be retracted along the channel.

The skate guide (30) may be a continuous body such as a single plate running the length of the channel or it may be formed of a number of elements that can either be collectively raised and lowered or independently raised and lowered by the lifting unit (40). The skate guide (30) may comprise a moulded or formed plate such as a pressed metal plate.
Optionally, the skate guide includes a pair of side guides (33), each side guide (33) running in parallel to one of the tracks (31) on the opposing side of the track to the upstand (32).
A pair of lips (50) preferably extend over the channel. In such an arrangement, the width of the skate guide is selected such that at least edges of the skate guide (30) abut the lips (50) when the skate guide (30) is in a raised position.
The lips (50) are preferably substantially co-planar with a floor of a transportable container (such as a lorry container, shipping container, van bed etc). Optionally, the lips may be part of the floor in which a slot has been formed between the lips to provide access to the channel.
The upstand (32) may have a semi-elliptical, semi-circular or an inverted "U" or "V" cross-section or other shape in the direction perpendicular to the tracks (31). Preferably, the shape is selected so that the upstand deflects the wheels of the skate should it start to de-track or if it is not correctly aligned when entering the channel such that the skate is caused to adjust itself and properly track in the channel.
Preferably, the skate guide (30) in the lowered position forms a base of the channel (10). The skate guide (30) substantially caps the channel (10) in the raised position. For example, if the skate guide abuts lips of the floor, there would be a slight bump as the level of the floor drops to the level of the skate guide and then another as the upstand is encountered. This would nevertheless be considered substantially flat for the purpose of wheeling pallets, boxes etc into and out of the container.
The skate (20) preferably has a pair of wheels (or other rolling elements). In a preferred embodiment, the pair of wheels are spaced apart and define a passage therebetween.

The passage extends substantially perpendicularly to the axes of the wheels such that the tracks (31) of the skate guide (30) each receive a respective wheel of the skate the upstand projects at least partly into the slot of the skate when the skate is running along the skate guide (30).

In a preferred embodiment, the skate loading system is installed into or formed within a transportable container (100) having a floor (110) for supporting goods to be transported. The channel of the skate loading system extends from an entrance of the container into the container.

The skate loading system may comprise a pair of said channels (10) running in parallel to each other into the container, the channels being set apart from each other to accommodate a pair of skates supporting a load therebetween.

By using a skate that is effectively split into two (the rollers preferably rotating about a common axis) that run along tracks guided by a, preferably central, upstand, continuous guidance for the skate in the channel can be provided.

Preferably, the skate guide is positioned in a channel in the container and can be raised/lowered. In a preferred embodiment, the skate guide may include a configuration for long-term raised use in the channel. For example, the skate guide may be raised by inflating an air sack which may then be sealed. A benefit of this arrangement is that when the trailer combination returns from the factory to the warehouse (for example a 50 km journey) it can hold return goods loaded by conventional hand pallet trucks, fork trucks or the like entering (via a loading dock) and loading pallets into this trailer combination. In one arrangement, an airbag is pressurized (e.g. 2 bar) which elevates a guide plate and keeps it elevated in the channel during the loading/unloading cycle. The wheels of the pallet truck or fork lift will not drop into the open channel, because it is blocked/capped by the guide plate and is substantially a flat floor.

In one embodiment, an approximately 15mm height upstand is used. Preferably, the skate guide is of a high tensile strength, cold rolled, pre-galvanised steel profiled section. This gives the desired strength plus long term corrosion resistance for use in the food industry.

Although the above discussion has focussed on features of transportable containers, it will be appreciated that they are also applicable to fixed installations such as loading docks, warehouses and the like.

## Claims

1. A transportable container (100) having a floor (110) for supporting goods to be transported and a skate loading system in said floor (110), the skate loading system including a channel (10) for receiving a skate (20) having a pair of wheels (25), the channel (10) including a skate guide (30) having a pair of tracks (31) each for receiving a respective wheel (25) of the skate (20), the skate loading system further comprising a lifting unit (40) controllable to raise and lower the skate guide (30) in the channel (10), the channel of the skate loading system extending from an entrance to said container into the container, wherein the skate guide has an upstand (32) running in between and in parallel to the tracks (31), **characterized in that** the upstand is equidistant to the sides of the skate guide (30) wherein when the skate guide is in the raised position the top of the upstand (32) is in line with the floor (110) of the container (100) so as to reduce the gap defined by the channel (10).

2. A transportable container (100) as claimed in claim 1, wherein the skate guide (30) extends across the width of the channel (10), each of the tracks (31) bordering an opposing side of the channel (10) and the upstand (32) running therebetween.

3. A transportable container (100) as claimed in claim 1 or 2, wherein the skate guide includes a pair of side guides (33), each side guide (33) running in parallel to one of the tracks (31) on the opposing side of the track to the upstand (32).

4. A transportable container (100) as claimed in claim 1, 2 or 3, further comprising a pair of lips (50) extending over the channel, at least edges of the skate guide (30) abutting the lips (50) when the skate guide (30) is in a raised position.

5. A transportable container (100) as claimed in claim 4, wherein the lips (50) are substantially co-planar with the floor (110).

6. A transportable container (100) as claimed in claim 5, wherein the lips (50) are part of the floor (110).

7. A transportable container (100) as claimed in any preceding claim, wherein the upstand (32) has a semi-elliptical, semi-circular or an inverted "U" or "V" cross-section in the direction perpendicular to the tracks (31).

8. A transportable container (100) as claimed in any preceding claim, wherein the skate guide (30) in the lowered position forms a base of the channel (10).

9. A transportable container (100) as claimed in any preceding claim, wherein the skate guide (30) comprises substantially caps the channel (10) in the raised position.

10. A transportable container (100) as claimed in any preceding claim, wherein the skate guide (30) comprises a moulded or formed plate.

11. A transportable container (100) as claimed in any preceding claim, further comprising a skate (20) having a pair of wheels, the pair of wheels being spaced apart and defining a passage therebetween, the passage extending substantially perpendicularly to the axes of the wheels whereby in use the tracks (31) of the skate guide (30) each receive a respective wheel of the skate the upstand projects at least partly into the slot of the skate when the skate is running along the skate guide (30).

12. A transportable container (100) as claimed in any preceding claim, wherein the lifting unit (40) includes an inflatable air sack having a selectable configuration for sealing the air sack when inflated for substantially long-term raised use of the skate guide.

13. A transportable container (100) as claimed in any preceding claim, wherein the skate loading system comprises at least a pair of said channels (10) running in parallel to each other into the container, the channels being set apart from each other to accommodate a pair of skates supporting a load therebetween.

## Patentansprüche

1. Transportierbarer Behälter (100)
- mit einem Trageboden (110) zum Tragen von zu transportierenden Gütern, und
- mit einem Rollschuhladesystem an dem genannten Trageboden (110),
- wobei das Rollschuhladesystem einen Kanal (10) zur Aufnahme eines Rollschuhs (20) mit einem Paar Räder (25) hat,
- wobei der Kanal (10) eine Rollschuhführung (30) mit einem Paar von Schienen (31) umfasst, die jede ein entsprechendes Rad (25) des Rollschuhs (20) aufnehmen,
- wobei das Rollschuhladesystem ferner eine Hebeeinheit (40) aufweist, um steuerbar die Rollschuhführung (30) im Kanal (10) anzuheben und abzusenken, und
- wobei sich der Kanal des Rollschuhladesystems von einem Eingang des genannten Behälters bis in den Behälter erstreckt,
- wobei die Rollschuhführung eine zwischen und parallel zu den Schienen (31) verlaufende Auflage (32) aufweist, **dadurch gekennzeichnet, dass** die Auflage von den Seiten der Rollschuhführung (30) gleich beabstandet ist, und
- wobei, wenn sich die Rollschuhführung in der angehobenen Position befindet, die Spitze der Auflage (32) mit dem Boden (110) des Behälters (100) eine Linie bilden, um die durch den Kanal (10) gebildete Lücke zu verringern.

2. Transportierbarer Behälter (100) nach Anspruch 1,
**dadurch gekennzeichnet,**
**dass** sich die Rollschuhführung (30) über die gesamte Breite des Kanals (10) erstreckt,
wobei jede der Schienen (31) angrenzend an einer der sich gegenüberliegenden Seiten des Kanals (10) und die Auflage (32) dazwischen verlaufen.

3. Transportierbarer Behälter (100) nach Anspruch 1 oder 2,
**dadurch gekennzeichnet,**
**dass** die Rollschuhführung ein Paar von Seitenführungen (33) aufweist,
wobei jede Seitenführung (33) parallel zu einer der Schienen (31) auf der gegenüberliegenden Seite der Schiene zur Auflage 32 verläuft.

4. Transportierbarer Behälter (100) nach Anspruch 1, 2 oder 3,
ferner aufweisend ein Paar von Lippen (50), die sich über den Kanal erstrecken,
wobei zumindest die Kanten der Rollschuhführung (30) an den Lippen (50) anliegen, wenn die Rollschuhführung (30) sich in einer angehobenen Position befindet.

5. Transportierbarer Behälter (100) nach Anspruch 4,
**dadurch gekennzeichnet,**
**dass** die Lippen (50) im Wesentlichen koplanar mit dem Trageboden (110) sind.

6. Transportierbarer Behälter (100) nach Anspruch 5,
**dadurch gekennzeichnet,**
**dass** die Lippen (50) Teil des Tragebodens (110) sind.

7. Transportierbarer Behälter (100) nach einem der vorhergehenden Ansprüche,
**dadurch gekennzeichnet,**
**dass** die Auflage (32) einen halb-elliptischen, halbkreisförmigen oder umgekehrten "U" - oder "V" -Querschnitt in der Richtung senkrecht zu den Schienen aufweist (31).

8. Transportierbarer Behälter (100) nach einem der vorhergehenden Ansprüche,
**dadurch gekennzeichnet,**
**dass** die Rollschuhführung (30) in der abgesenkten Position eine Basis des Kanals (10) bildet.

9. Transportierbarer Behälter (100) nach einem der vorhergehenden Ansprüche,
**dadurch gekennzeichnet,**
**dass** die Rollschuhführung (30) in der angehobenen Position im Wesentlichen den Kanal (10) überdeckt.

10. Transportierbarer Behälter (100) nach einem der vorhergehenden Ansprüche,
**dadurch gekennzeichnet,**
**dass** die Rollschuhführung (30) eine geformte oder gepresste Platte aufweist.

11. Transportierbarer Behälter (100) nach einem der vorhergehenden Ansprüche,
ferner aufweisend einen Rollschuh (20) mit einem Räderpaar,
- wobei das Paar von Rädern voneinander beabstandet ist und ein Durchgang dazwischen vorhanden ist.
- wobei der Durchgang sich im Wesentlichen senkrecht zu den Achsen der Räder erstreckt,
- wobei bei der Nutzung der Schienen (31) der Rollschuhführung (30) jeweils ein entsprechendes Rad des Rollschuhs aufgenommen wird, und
- wobei die Auflage zumindest teilweise in den Zwischenraum des Rollschuhs hineinragt, wenn der Rollschuh entlang der Rollschuhführung (30) läuft.

12. Transportierbarer Behälter (100) nach einem der vorhergehenden Ansprüche,
**dadurch gekennzeichnet,**
**dass** die Hebeeinheit (40) einen aufblasbaren Luftsack mit einer auswählbaren Konfiguration zum Ausrichten des Luftsackes aufweist, wenn er für eine im Wesentlichen langfristig erhöhte Verwendung der Rollschuhführung aufgeblasen wird.

13. Transportierbarer Behälter (100) nach einem der vorhergehenden Ansprüche,
**dadurch gekennzeichnet,**
- **dass** das Rollschuhladesystem mindestens ein Paar der genannten, in dem transportierbaren Behälter parallel zueinander verlaufenden Kanäle (10) aufweist, und
- **dass** die Kanäle voneinander getrennt sind, um ein Paar Rollschuhe aufzunehmen, die dazwischen eine Ladung tragen.

## Revendications

1. Conteneur transportable (100) ayant un plancher (110) pour supporter des marchandises à transporter et un système de chargement à patin sur ledit plancher (110), le système de chargement à patin incluant un canal (10) pour recevoir un patin (20) ayant une paire de roues (25), le canal (10) comprenant un guide de patin (30) comportant une paire de pistes (31) pour recevoir chacune des roues (25) du patin (20), le système de chargement à patin comportant en outre une unité de levage (40) commandable pour élever et abaisser le guide de patin (30) dans le canal (10), le canal du système de chargement à patin s'étendant depuis une entrée du conteneur dans le conteneur, dans lequel le guide de patin possède une saillie (32) s'étendant entre et parallèlement aux pistes (31), **caractérisé en ce que** la saillie est équidistante des bords du guide de patin (30) dans lequel lorsque le guide de patin est en position relevée, le dessus de la saillie (32) est aligné avec le plancher (110) du conteneur (100) de sorte à réduire le gap défini par le canal (10).

2. Conteneur transportable (100) selon la revendication 1, dans lequel le guide de patin (30) s'étend selon la largeur du canal (10), chacune des pistes (31) bordant un côté opposé du canal (10) et la saillie (32) entre celles-ci.

3. Conteneur transportable (100) selon la revendication 1 ou 2, dans lequel le guide de patin (30) comprend une paire de guides latéraux (33), chaque guide latéral (33) s'étendant parallèlement à l'une des pistes (31) sur le côté de la piste opposé à la saillie (32).

4. Conteneur transportable (100) selon la revendication 1 2 ou 3, comporte en outre une paire de lèvres (50) s'étendant dans le canal, au moins les bords du guide de patin (30) s'appuyant contre les lèvres (50) lorsque le guide de patin (30) est en position relevée.

5. Conteneur transportable (100) selon la revendication 4, dans lequel les lèvres (50) sont sensiblement coplanaires avec un plancher (110).

6. Conteneur transportable (100) selon la revendication 5, dans lequel les lèvres (50) font partie du plancher (110).

7. Conteneur transportable (100) selon l'une quelconque des revendications précédentes, dans lequel la saillie (32) a une section transversale semi-elliptique, semi-circulaire ou en "U" ou "V" inversé dans la direction perpendiculaire aux pistes (31).

8. Conteneur transportable (100) selon l'une quelconque des revendications précédentes, dans lequel le guide de patin (30) dans la position abaissée forme une base du canal (10).

9. Conteneur transportable (100) selon l'une quelconque des revendications précédentes, dans lequel le guide de patin (30) comprend sensiblement le canal (10) dans la position relevée.

10. Conteneur transportable (100) selon l'une quelconque des revendications précédentes, dans lequel le guide de patin (30) comprend une plaque moulée ou formée.

11. Conteneur transportable (100) selon l'une quelconque des revendications précédentes, comprenant en outre un patin (20) ayant une paire de roues, la paire de roues étant espacée et définissant un passage entre celles-ci, le passage s'étendant sensiblement perpendiculairement aux axes des roues, et en position d'utilisation, les pistes (31) du guide de patin (30) reçoivent chacune une roue respective du patin, la saillie se projetant au moins partiellement dans la fente du patin lorsque le patin court le long du guide de patin (30).

12. Conteneur transportable (100) selon l'une quelconque des revendications précédentes, dans lequel l'unité de levage (40) comprend un sac gonflable à l'air ayant une configuration sélectionnée afin d'étancher le sac d'air lorsqu'il est gonflé pour une utilisation sensiblement prolongée du guide de patin.

13. Conteneur transportable (100) selon l'une quelconque des revendications précédentes, dans lequel le système de chargement à patin comporte au moins une paire de canaux (10) courant en parallèle l'un à l'autre dans le conteneur, les canaux étant disposés à distance l'un de l'autre pour coopérer avec une paire de patins portant une charge entre eux.
